# EUROPEAN PATENT SPECIFICATION

(11) **EP 3 728 838 B1**
(45) Date of publication and mention of the grant of the patent: **05.10.2022**
(21) Application number: 18818981.5
(22) Date of filing: 04.12.2018
(51) Int. Cl.: F03D 7/02

(54) **APPLYING WIND TURBINE YAW MOMENT VIA PITCHING**
ANWENDUNG EINES WINDTURBINENGIERMOMENTS DURCH VERÄNDERN DES PITCHWINKELS
APPLICATION D'UN MOMENT DE LACET DE L'ÉOLIENNE EN MODIFIANT L'ANGLE DU PAS

(30) Priority: 20.12.2017 DK PA201770965
(43) Date of publication of application: 28.10.2020
(73) Proprietor: VESTAS WIND SYSTEMS A/S, 8200 Aarhus N (DK)
(72) Inventor: YDE, Anders, 8000 Aarhus C (DK); NETO, Julio Xavier Vianna, 8200 Århus N (DK); SØRENSEN, Kim Hylling, 8000 Århus C (DK)
(74) Representative: Vestas Patents Department
(86) International application number: PCT/DK2018/050321
(87) International publication number: WO 2019/129326

(56) References cited:
- EP-A1- 2 037 119
- EP-A2- 2 003 335
- EP-B1- 2 037 119
- WO-A1-2015/074664
- WO-A1-2016/128005

## Description

### FIELD OF THE INVENTION

The present invention relates to a method for controlling a rotor on a wind turbine, more particularly for pitching one or more blades on the rotor based on control or yawing parameters and a corresponding control system, wind turbine and computer program product.

### BACKGROUND OF THE INVENTION

When a wind turbine rotor is in an operating state of idling or standstill, such as is in a non-power producing state and neither starting up nor shutting down, forces external to the wind turbine, such as aerodynamic forces, may exert a yawing moment on the wind turbine. This yawing moment may lead to damaging effects on the wind turbine.

Hence, it would be advantageous to enable mitigating these damaging effects, and in particular it would be advantageous to enable reducing or eliminating these damaging effects and for example enable increasing the lifetime of the wind turbine.

A prior art example is disclosed in WO2016128005A1.

### SUMMARY OF THE INVENTION

It may be seen as an object of the present invention to provide a method for controlling a rotor on a wind turbine that solves the above mentioned problems of the prior art with forces external to the wind turbine, such as aerodynamic forces, which may exert a yawing moment on the wind turbine which leads to damaging effects on the wind turbine.

The above described object is intended to be obtained in a first aspect of the invention by providing a method for controlling a rotor on a wind according to claim 1.

The invention is particularly, but not exclusively, advantageous for obtaining a method where the control parameters may serve as input to pitching, which may enable that pitching can be used to generate forces, which serve to maintain or change the values of the control parameters (such as in a closed-loop control system). For example, in case of optimal values of the control parameters, pitching can be used to generate forces, which serve to maintain the values of the control parameters. In another example, in case of undesirable or sub-optimal values of the control parameters, pitching can be used to generate forces, which serve to change the values of the control parameters towards more optimal values. This may for example in turn reduce or eliminate the need of a yaw system and/or may enable yawing during a yaw system failure.

The present invention may in particular be relevant in case of a failure in the yaw system, such as a failure in one or more components implementing a predetermined friction level. The yaw system may comprise a sliding feature to relieve extreme loads, and there may be a certain threshold or a "friction level" during normal operation. When there is a fault in the yaw system, such as in components implementing the sliding feature, this "friction level" could be reduced. When a wind turbine is in an idling or standstill operating state, such as because of a failure in the yaw system, e.g., turbulence and/or a wind direction change might yaw the yawing section (which may be allowed to slide during high yaw loads). However, for example in case of a failure in the yaw system, the yaw sliding moment threshold may be decreased, which may lead to a high, such as too high, angular yawing velocity which may further overload the yaw system. In an embodiment according to the present invention, pitching may be carried out based on the control parameters so as to counteract the yawing and reduce the angular yawing velocity. As an example, in a three blade rotor in a multi-rotor wind turbine this may be done by pitching two blades and thereby increase drag to generate a yawing moment on the yawing section around the yaw axis, which yawing moment serve to slow down a too high angular yawing velocity.

The 'wind turbine' may in embodiments be a horizontal (rotor) axis wind turbine and/or an upwind wind turbine.

The 'rotor' is understood as is common in the art. It may be understood that a wind turbine may have only a single rotor (in a single rotor wind turbine) or have multiple rotors (in a multi-rotor wind turbine). Reference to 'rotor' implies reference to one rotor (such as the one rotor in a single rotor wind turbine or one rotor in a multi-rotor wind turbine). For a multi-rotor wind turbine, it is understood that a rotor in an idling or standstill operating state does not imply that remaining rotors are also in an idling or standstill operating state. It is encompassed by the present invention to have one rotor in a multi-rotor wind turbine in an idling or standstill operating state and have another rotor not being in an idling or standstill operating state, such as said other rotor being in normal, power producing operation.

'Standstill' is understood as is common in the art, and may be understood to describe an operating state of the rotor, wherein the rotor (such as the rotor and the corresponding generator) is not power producing (such as not delivering power to the grid) and wherein the rotor is braked, such as where the rotation around the rotor axis is kept at zero angular velocity.

'Idling' is understood as is common in the art, and may be understood to describe an operating state of the rotor, wherein the rotor (such as the rotor and the corresponding generator) is not power producing (such as not delivering power to the grid) and wherein the rotor is allowed to rotate freely. For example, the blades may or may not be rotating, but the rotor (such as the rotor and the corresponding generator) is not delivering power to the grid.

By 'determining or receiving (one or more control parameters)' may be understood that the method may comprise determining (such as obtaining one or more input parameters, e.g., by sensing, and then translate these parameters into the one or more control parameters) or simply receiving the one or more control parameters (such as simply receiving the one or more control parameters from an associated entity).

By 'one or more control parameters' is understood parameters which are related to the one or more yawing parameters in a manner allowing the yawing parameters to be described as a function of the one or more control parameters. More particularly, a set of one or more control parameters is related to exactly one set of one or more yawing parameters. This may be advantageous, e.g., for enabling closed-loop control of pitching based on the control parameters and thereby controlling the one or more yawing parameters (with or without knowing values the yawing parameters). In an embodiment, the control parameters enable determining the absolute values of the one or more yawing parameters (such as in units according to the International System of Units (SI)). In another embodiment, the one or more control parameters comprise or is identical to the one or more yawing parameters.

By 'yawing section' is understood a portion of the wind turbine which may be yawed with respect to the remainder of the wind turbine. The yaw axis may be orthogonal to the rotor axis (for a horizontal axis wind turbine). 'Yawing' is understood as is common in the art, such as rotation of the rotor axis about a vertical axis (for horizontal axis wind turbines). The 'yawing section' may in embodiments comprise the rotor and a nacelle. The remainder of the wind turbine may in embodiments comprise a tower.

By 'yawing moment' is generally understood a yawing moment of force, such as a torque. The wording 'applied by the yawing section on a remainder of the wind turbine' implies that the yawing section may apply a moment around the yawing axis on the remainder of the wind turbine (and vice versa). This may be regardless of whether or not there is yawing (i.e., the angular yawing velocity may be zero or non-zero). For example: In case the yawing is being fixed (braked), there is angular yawing velocity and zero angular yawing acceleration in the yaw bearing, but there may or may not be yawing moment applied on the remainder of the wind turbine, such as a tower. It may be added that in practice, the tower may have a non-zero torsional flexibility, thus even if the yaw system is braked and non-sliding, the angular yawing velocity may be non-zero and there may be an angular yawing acceleration in case of an applied yawing moment.

By 'pitching based on the one or more control parameters' may be understood that the pitching is carried out in dependence of the one or more control parameters, such as pitching being a function of the one or more control parameters.

In an embodiment, there is presented a method for controlling a rotor on a wind turbine, wherein said pitching is carried out so as to increase or reduce an aerodynamically induced yaw moment (M_{aero-yaw}) applied by aerodynamic forces, such as drag forces, on the yawing section. This may be advantageous in that aerodynamic forces acting on the rotor, such as drag forces, may be increased or decreased via pitching, and since these aerodynamic forces may effectively exert a yaw moment on the yawing section. An advantage of this may be that the pitching may be utilized to maintain optimal values of the one or more yawing parameters and/or improve values of the one or more yawing parameters.

In another embodiment, there is presented a method for controlling a rotor on a wind turbine, wherein the pitching is carried out so that a resulting change in aerodynamic force on the one or more blades contributes to reduce the one or more yawing parameters (such as values of the one or more yawing parameters).

This may be advantageous for avoiding via pitching that the one or more yawing parameters gets too high and/or for avoiding that the one or more yawing parameters have undesirably high values for too long periods of time.

In a second aspect, the invention relates to a multi-rotor wind turbine comprising a control system according to claim 11.

According to an alternative aspect, the invention relates to a control system, such as said control system comprising or controlling actuators, adapted to carry out the method according to the first aspect.

The control system may be arranged to determine pitch angle set point values and may be implemented in a general controller for a wind turbine or a control element, such as a dedicated pitch controller. In an example, the control system receives the one or more control parameters, sets a pitch angle set point value (also known as pitch reference) to a pitch control system, which control a pitch system which in turn control the pitch angles of the blades.

In a third aspect, the invention relates to a computer program product comprising instructions which, when the program is executed by a computer, such as a computer in a control system according to the second aspect, cause the computer to carry out the steps according to the first aspect. According to an alternative aspect, the invention relates to a computer-readable data carrier having stored thereon the computer program product of the fourth aspect. According to an alternative aspect, the invention relates to a data carrier signal carrying the computer program product of the fourth aspect.

Many of the attendant features will be more readily appreciated as the same become better understood by reference to the following detailed description considered in connection with the accompanying drawings.

### BRIEF DESCRIPTION OF THE FIGURES

Figure 1 depicts a single rotor wind turbine,
Figure 2 depicts a multi-rotor wind turbine,
Figure 3 shows a flowchart of a method for controlling a rotor on a wind turbine,
Figure 4 shows a flowchart of another method for controlling a rotor on a wind turbine,
Figures 5-7 show an example of application of an embodiment of the invention,
Figure 8 shows a graph of the pitch angles,
Figure 9 shows a yawing angle according to a simulation result,
Figure 10 shows angular yawing velocity according to a simulation result
Figure 11 shows a schematic illustrating yawing in a multi-rotor wind turbine.

### DESCRIPTION OF EMBODIMENTS

The present invention will now be explained in further details. While the invention is susceptible to various modifications and alternative forms, specific embodiments have been disclosed by way of examples.

In embodiments of the present invention, there is presented a method for controlling a rotor on a wind turbine according to any one of the preceding claims, wherein the wind turbine is a single rotor wind turbine, such as wherein the single rotor is comprising one or more blades.

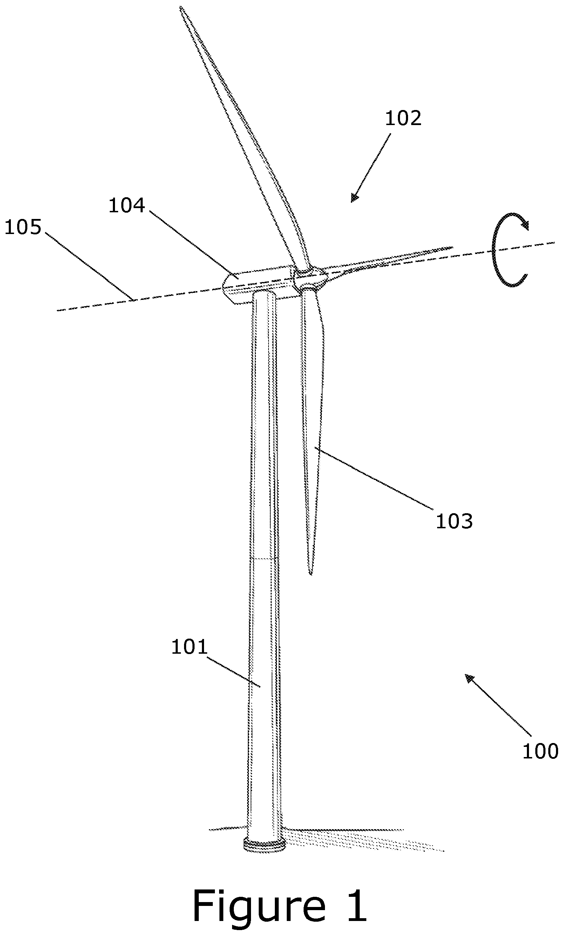

Figure 1 shows a wind turbine 100 (which may also be referred to as a wind turbine generator (WTG)). The wind turbine in figure 1 is a single rotor wind turbine comprising a tower 101 and a rotor 102 with at least one rotor blade 103, such as three rotor blades. The rotor is connected to a nacelle 104, which is mounted on the top of the tower 101 and being adapted to drive a generator situated inside the nacelle. The rotor 102 is rotatable around a rotor axis 105 by action of the wind. The wind induced rotational energy of the rotor blades 103 is transferred via a shaft to an electrical generator. Thus, the wind turbine 100 is capable of converting kinetic energy of the wind into mechanical energy by means of the rotor blades and, subsequently, into electric power by means of the generator. The generator may include a power converter for converting the generator AC power into a DC power and a power inverter for converting the DC power into an AC power to be injected into a utility grid. The generator is controllable to produce a power corresponding to a power request. Alternatively, it is controllable to produce a generator torque corresponding to a torque request. The rotor blades 103 can be pitched in order to alter the aerodynamic properties of the blades, e.g., in order to maximize uptake of the wind energy and to ensure that the rotor blades are not subjected to too large loads when strong winds are blowing.

In embodiments of the present invention, there is presented a method for controlling a rotor on a wind turbine, wherein the wind turbine is a multi-rotor wind turbine, such as wherein the wind turbine is comprising a plurality of rotors, and wherein each rotor in the plurality of rotors is comprising one or more blades.

In a wind turbine, such as a single rotor wind turbine or a multi-rotor wind turbine (2 or more rotors), when the wind turbine is in standstill or idling, e.g., because of a failure in the yaw system, turbulence and/or a wind direction change might yaw the yawing section. However, when for example a failure is present in the yaw system, the yaw sliding moment threshold may be decreased, causing yawing excessively or yawing at too high yaw speeds, which may further overload the yaw system. In embodiments of the present invention the wind turbine pitch system in one or more of the plurality of rotors may enable counteracting this movement and reduce the angular yawing velocity and/or yawing moment by pitching two blades in one of the rotors and thereby increase drag to apply a yawing moment to the yawing section.

For multi-rotors, the angular yawing velocity may be very high. Therefore, embodiments of the present invention may be particularly relevant for multi-rotor wind turbines, such as for reducing the cost of the yaw system in multi-rotor wind turbines.

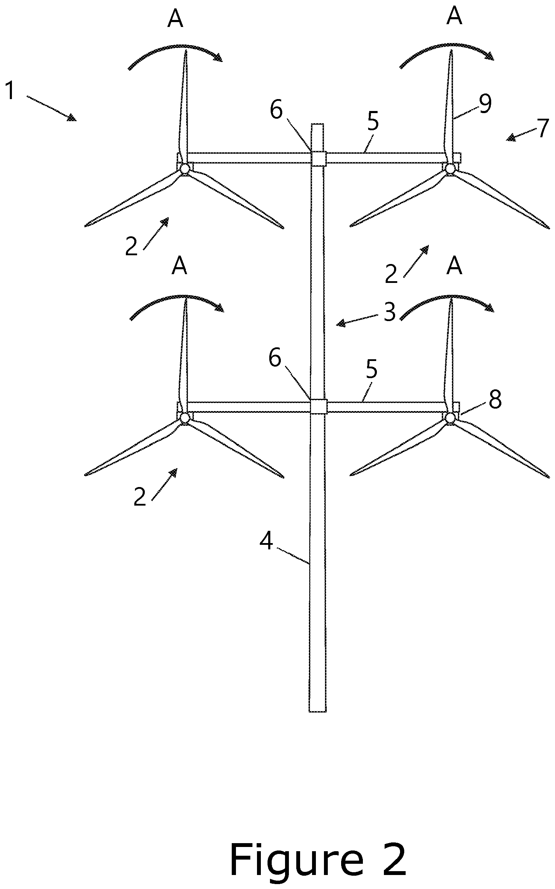

Figure 2 depicts a wind turbine 1, wherein the wind turbine is a multi-rotor wind turbine comprising:
- A support structure 3 including a tower 4 and arms 5 mounted to the tower 4 at junctions 6,
- a plurality of wind turbine modules 2 mounted to the support structure 3 wherein each of the plurality of wind turbine modules comprises a rotor 7.

In the present embodiment the support structure comprises arms 5 extending outwards from the tower 4, each of the plurality of wind turbines being mounted on an end part of a corresponding arm. Furthermore, figure 1 depicts a nacelle 8 for each wind turbine module. In the wind turbine modules 2, the kinetic energy of the wind is converted into electrical energy by a power generation system (not shown), as it will be readily understood by a person skilled in wind turbines. As indicated by the four arrows A in figure 2 the rotors may be rotating. Figure 2 shows a support structure with two arms each having two wind turbine modules, but other embodiments are conceivable, e.g., four arms with four wind turbine modules each or three arms with lower, middle and upper arm, respectively having six, four and two wind turbine modules.

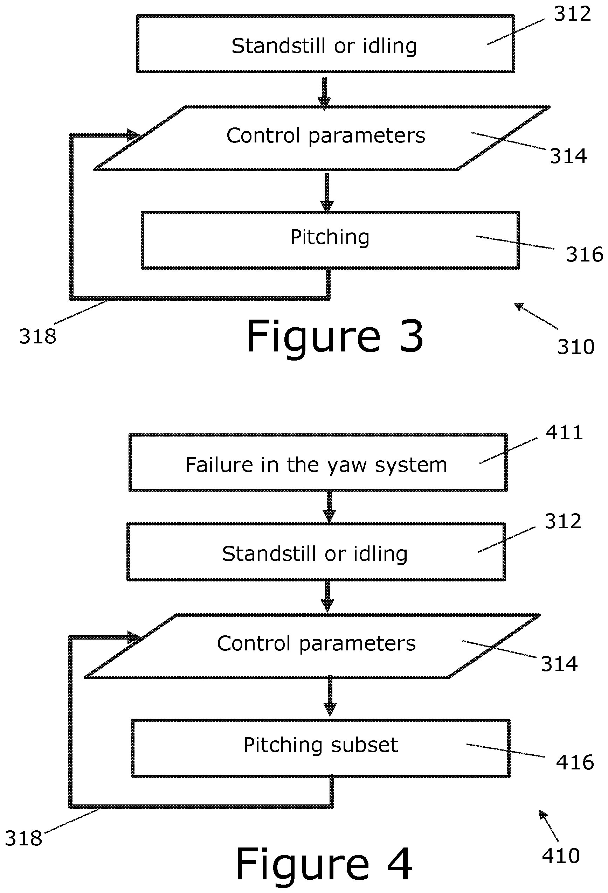

Figure 3 shows a flowchart of a method 310 for controlling a rotor on a wind turbine, wherein the rotor is comprising one or more blades, and wherein the wind turbine is comprising:
- A pitch system, such as a pitch system for pitching one or more blades of the rotor,
the method comprising:
- Operating 312 the rotor in a standstill or idling operating state,
- Determining or receiving 314 one or more control parameters, where one or more yawing parameters may be described as a function of the one or more control parameters, wherein the one or more yawing parameters comprises one or more of:
   i. An angular yawing velocity (ω) of a yawing section, such as the yawing velocity (ω) of the yawing section with respect to a remainder of the wind turbine,
   ii. An angular yawing acceleration (a) of the yawing section, such as the yawing acceleration (a) of the yawing section with respect to a remainder of the wind turbine,
      and/or
   iii. A yawing moment (M) applied by the yawing section on a remainder of the wind turbine, and
- Pitching 316 based on the one or more control parameters one or more blades of the rotor with the pitch system.

The arrow 318 indicates that the method can be carried out as closed-loop controlling.

Figure 4 shows a flowchart of another method 410, which is similar to the method depicted in figure 3 albeit with differences, including that the method is further comprising:
- Detecting 411 a failure in the yaw system.

It may be noted, that embodiments of the present invention may present a new protection strategy for a turbine with a fault condition in the yaw system.

Another difference of the method depicted in figure 4 and the method depicted in figure 3 is that the in the method depicted in figure 4, pitching one or more blades comprises:
- Pitching 416 a subset of the one or more blades of a rotor, such as a single rotor, to a larger extent than the remaining blades of the rotor, such as pitching 2 and only 2 blades on a 3-blade rotor.

In embodiments there is presented a method for controlling a wind turbine wherein pitching a subset of the one or more blades comprises:
- Pitching 1 and only 1 blade on a 3 or 2 blade rotor
   or
- Pitching 2 and only 2 blades on a 3-blade rotor.

A possible advantage of only pitching a subset of blades, such pitching only one or two blades of a three-blade rotor may be that speed up is limited. In other words, it is avoided that the angular velocity of the rotor gets too high.

In embodiments there is presented a method for controlling a rotor on a wind turbine 100 wherein the wind turbine is comprising:
- A yaw system for yawing a yawing section of the wind turbine, such as for yawing a yawing section of the wind turbine with respect to a remainder of the wind turbine.

It may be understood that that yaw system and the pitch system are not the same system.

In embodiments there is presented a method for controlling a rotor on a wind turbine according to any one of the preceding claims, wherein pitching the one or more blades comprises:
- Pitching in an azimuthal dependent manner, such as cyclically pitching in an azimuthal dependent manner, such as so as to create a non-zero net moment when summing moment contributions throughout the full azimuthal range.

By 'pitching in an azimuthal dependent manner' may be understood that the pitching is based on the azimuthal angle of the rotor. For example, pitching may be carried out only when the blade is on one side of the rotor axis with respect to the yawing axis, such as the far side of the rotor axis with respect to the yawing axis. An advantage of pitching in an azimuthal dependent manner may be that it enables increasing the yaw moment and/or that it enables exerting a yaw moment (from aerodynamic forces) on a centrally placed (with respect to the yaw axis) rotor, such as a single rotor, such as a single rotor with very large rotor plane where there can be a significant difference in wind speed in rotor plane causing yaw loads.

In embodiments there is presented a method for controlling a rotor on a wind turbine wherein pitching in an azimuthal dependent manner, such as cyclically pitching in an azimuthal dependent manner, one or more blades comprises pitching one or more blades on a rotor so that a moment from drag forces on the one or more blades yields a net non-zero moment around an axis being parallel with a yawing axis and intersecting a rotation axis of the rotor, such as when integrating a moment from drag forces on the one or more blades across a full rotor revolution yields a net non-zero moment around an axis being parallel with a yawing axis and intersecting a rotation axis of the rotor. For example, for a rotor axis being displaced with respect to the yaw axis - a moment integrated on the far side with respect to the yaw axis is greater than a moment integrated on the near side with respect to the yaw axis. An advantage of this might be that for a multi-rotor, then the non-central rotors adds even more than their non-central position warrants, because there is a greater moment from the side facing away from the yaw axis than the side facing the yaw axis. Another advantage of this may be that it enables creating a yaw moment from the rotor (such as for a rotor on a single rotor wind turbine), even if the rotor has the rotor axis intersecting the yawing axis.

In embodiments there is presented a method for controlling a rotor on a wind turbine 100 (such as a rotor where wind direction/drag force and vector from yaw axis to the center of the rotor plane are not parallel) wherein pitching in an azimuthal dependent manner, such as cyclically pitching in an azimuthal dependent manner, one or more blades comprises pitching one or more blades on a rotor so that a drag on the one or more blades is larger in a first azimuthal range relative to a drag in a second azimuthal range, wherein the first azimuthal range is further away from the yaw axis than the second azimuthal range, such as wherein the first azimuthal range is the half of the rotor plane furthest away from the yawing axis and the second azimuthal range is the half of the rotor plane closest to the yawing axis.

In embodiments there is presented a method for controlling a rotor on a wind turbine 100 comprising predicting one or more future values of the control parameters and wherein pitching is based on said future values. In embodiments there is presented a control system being arranged for (or a method for):
- Estimating, such as using LIDAR based wind speed predictions, at a decision point in time (t_{dec}) estimated values at a future point in time (tf) of one or more control parameters,
- Pitching (316) based on the estimated values at a future point in time (tf) of one or more control parameters one or more blades (103) of the rotor (100) with the pitch system.

It may be understood, that the future point in time (tf) is later than the decision point in time.

In embodiments there is presented a control system being arranged for (or a method for):
- Estimating, such as using LIDAR based wind speed predictions, at a decision point in time (t_{dec}) whether one or more control parameters at a future point in time (tf) exceed one or more control parameter threshold values, such as whether:
   i. An angular yawing velocity (ω_{f}) of the yawing section, such as the yawing velocity (ω) of the yawing section with respect to a remainder of the wind turbine, at a future point in time (tf) is above an angular yawing velocity threshold (ωₜₕᵣ),
      and/or whether:
   ii. A yawing moment (Mf) applied by the yawing section on a remainder of the wind turbine at a future point in time (tf) is above a yawing moment threshold (Mₜₕᵣ),
- such as upon estimating that a control parameter value is exceeded, such as upon estimating that anyone or more of said angular yawing velocity threshold (ωₜₕᵣ) and said a yawing moment threshold (Mₜₕᵣ) is exceeded at the future point in time: Pitching one or more blades of the rotor so that aerodynamic forces exert forces on the yawing section creating a moment around the yawing axis of the wind turbine so as to reduce the one or more control parameters, such as reduce the angular yawing velocity (ω_{f}) of the yawing motion of the wind turbine and/or the yawing moment threshold (Mf) at the future point in time (tf).

It may be understood, that the future point in time (tf) is later than the decision point in time.

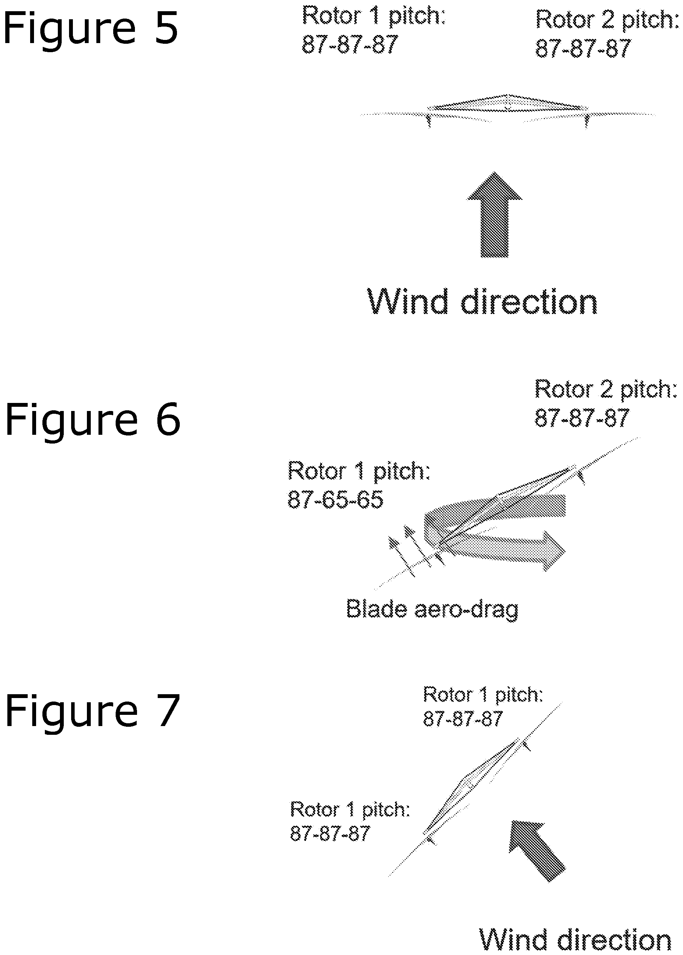

Figures 5-7 show an example of application of an embodiment of the invention. In each of figures 5-7, a multi-rotor wind turbine where each rotor has three blades (such as the multi-rotor wind turbine depicted in figure 2) is seen in a direction along the yaw axis.

Figure 5 shows a multi-rotor wind turbine where a wind direction change or turbulence may cause high yaw loads and turbine to yaw in yaw failure mode at standstill or idling.

Figure 6 shows that by pitching 2 blades in one rotor ("rotor 1") from an angle of 87 degrees to 65 degrees, drag is increased and the yaw motion is slowed down to protect the yaw system (from overheating or further damage).

Figure 7 shows the pitched blades of rotor 1 pitched back to feather after the yaw motion is over.

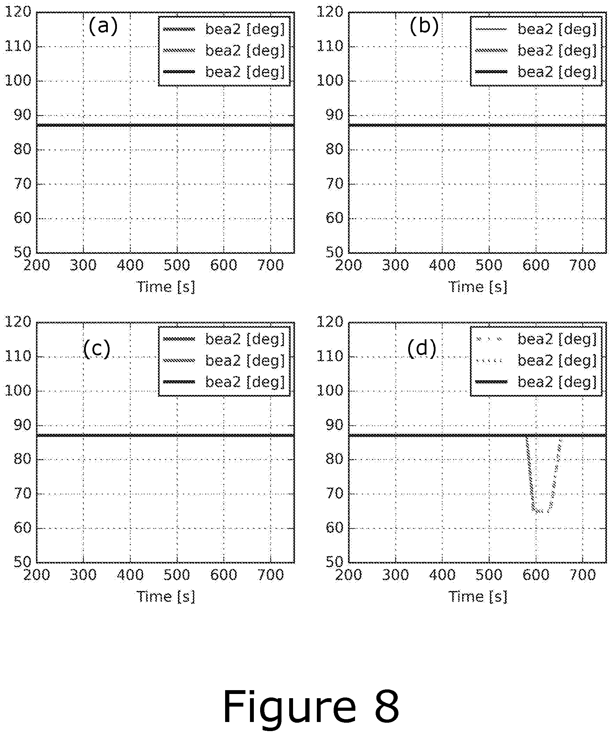

Figure 8 shows a graph of simulated pitch angles (as shown in degrees on the y-axes of the graphs) of the three blades of each of the two rotors in figures 5-7. The legend shows the sensor label "bea2" in the simulation, corresponding to the sensor label for each blade in a 3-blade rotor. The sub-figures show (a) all blades in rotor 1 (such as the upper left rotor in figure 2) is pitched at angles 87-87-87 degrees, (b) all blades in rotor 2 (such as the upper right rotor in figure 2) is pitched at angles 87-87-87 degrees. The upper row of subfigures (a)-(b) corresponds to the situation in figure 5. The sub-figures further show (c) all blades in rotor 1 (such as the upper left rotor in figure 2) is pitched at angles 87-87-87 degrees, (d) one blade in rotor 2 (such as the upper right rotor in figure 2) is still pitched at an angle of 87 degrees, but the other two blades are for a while around ca. 600 seconds pitched at 65 degrees. The lower row of subfigures (c)-(d) corresponds to the situation in figure 6.

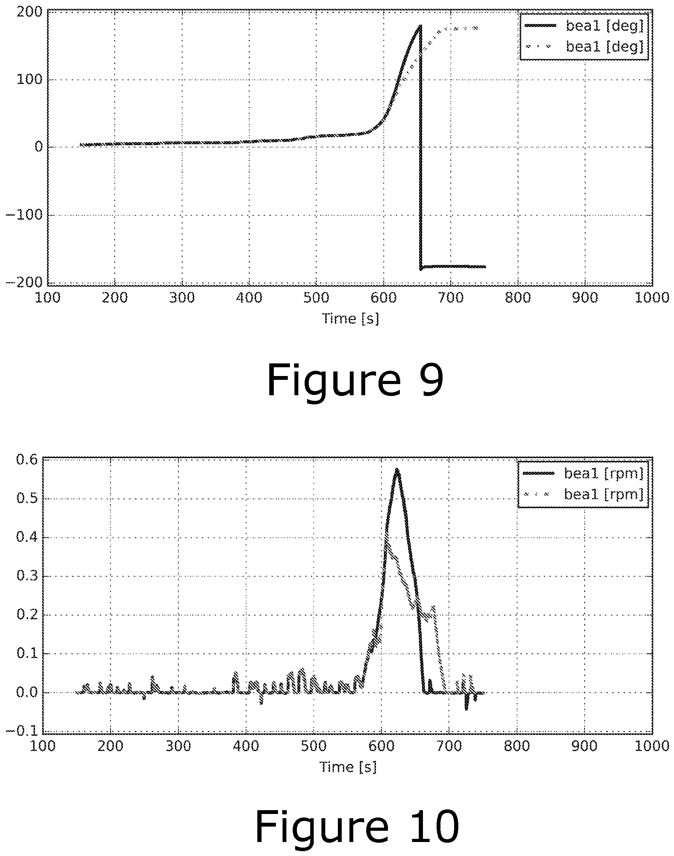

Figure 9 shows a simulation result, where pitching is carried out as shown in figure 8. Figure 9 shows yawing angle [degrees] (on the y-axis) as a function of time. The legend shows the sensor label "beal" in the simulation, corresponding to the sensor label for wind turbine. The graphs represent a baseline (full-drawn curve), where no pitching is carried out, and the result (dotted line), where pitching is carried out. It can be seen that the change in yawing angle is smoothed out across a larger period of time by the pitching.

Figure 10 shows a simulation result corresponding to Figure 9, except that in figure 10 the y-axis shows angular yawing velocity [rpm]. Again, the graphs represent a baseline (full-drawn curve), where no pitching is carried out, and the result (dotted line), where pitching is carried out. It can be seen, that a smaller maximum angular yawing velocity is achieved by pitching.

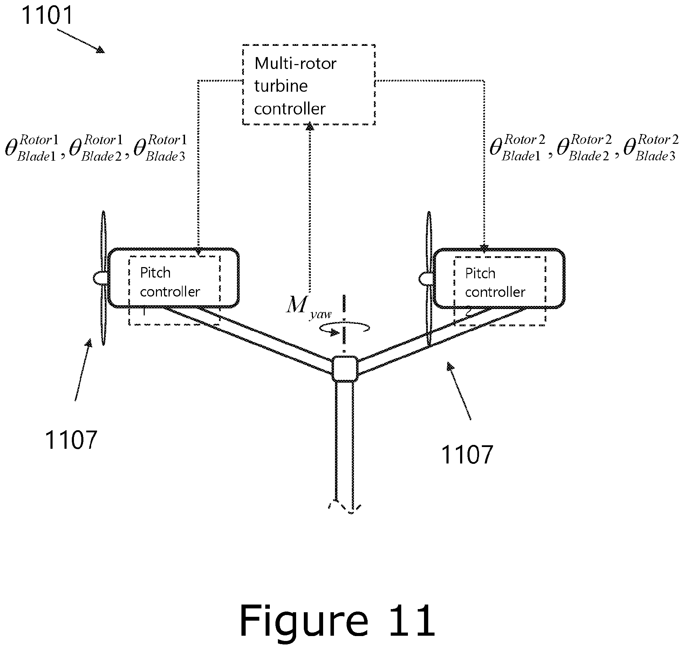

Figure 11 shows a schematic illustrating yawing in a multi-rotor wind turbine. More particularly, the schematic illustrates a multi-rotor wind turbine 1101 with first and second rotors 1107a-b. A control system may be arranged to determine pitch angle set point values and may be implemented in a multi-rotor turbine controller, which send the pitch angle set point values to, respectively, a pitch controller 1 (for the first rotor 1107a) and a pitch controller 2 (for the second rotor 1107b). Thus, the control system (the multi-rotor turbine controller) receives the one or more control parameters (and optionally a yawing moment (M or M_{yaw}) applied by the yawing section on a remainder of the wind turbine, sets a pitch angle set point value or sets of pitch angle set point values (also known as pitch reference), such as, respectively, {Θ_{Blade1}^{Rotor1}, Θ_{Blade2}^{Rotor1}, Θ_{Blade3}^{Rotor1}} (for the first rotor 1107a) and {Θ_{Blade1}^{Rotor2}, Θ_{Blade2}^{Rotor2} Θ_{Blade3}^{Rotor2}} (for the second rotor 1107b) to , respectively, pitch controller 1 and pitch controller 2 system, which each control a pitch system which in turn controls the pitch angles of the blades.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. A method (310) for controlling a rotor (102) on a multi-rotor wind turbine (100), wherein the rotor is comprising one or more blades (103), and wherein the wind turbine is comprising:
- A pitch system,
the method comprising:
- Operating (312) the rotor in a standstill or idling operating state,
- Determining or receiving (314) one or more control parameters, where one or more yawing parameters may be described as a function of the one or more control parameters, wherein the one or more yawing parameters comprises one or more of:
i. An angular yawing velocity of a yawing section,
ii. An angular yawing acceleration of the yawing section,
and/or
iii. A yawing moment applied by the yawing section on a remainder of the wind turbine, and
- Pitching (316) based on the one or more control parameters a subset of the one or more blades of the rotor to a larger extent than the remaining blades of the rotor (100) with the pitch system.

2. A method (310) for controlling a rotor on a wind turbine (100) according to any one of the preceding claims, wherein said pitching is carried out so as to increase or reduce an aerodynamically induced yaw moment applied by aerodynamic forces on the yawing section.

3. A method (310) for controlling a rotor on a wind turbine (100) according to any one of the preceding claims, wherein the wind turbine is comprising:
- A yaw system for yawing a yawing section of the wind turbine.

4. A method (310) for controlling a rotor on a wind turbine (100) according to claim 3, wherein the method is further comprising:
- Detecting (411) a failure in the yaw system.

5. A method (310) for controlling a rotor on a wind turbine (100) according to any one of the preceding claims, wherein the pitching is carried out so that a resulting change in aerodynamic force on the one or more blades contributes to reduce the one or more yawing parameters.

6. A method (310) for controlling a rotor on a wind turbine according to any one of the preceding claims, wherein the wind turbine is a single rotor wind turbine (100).

7. A method (310) for controlling a rotor on a wind turbine according to claim 1, wherein pitching a subset of the one or more blades comprises:
- Pitching 1 and only 1 blade on a 3 or 2 blade rotor
or
- Pitching 2 and only 2 blades on a 3-blade rotor.

8. A method (310) for controlling a rotor on a wind turbine according to any one of the preceding claims, wherein pitching the one or more blades comprises:
- Pitching in an azimuthal dependent manner.

9. A method (310) for controlling a rotor on a wind turbine according to claim 8, wherein pitching in an azimuthal dependent manner, one or more blades comprises pitching one or more blades on a rotor so that a moment from drag forces on the one or more blades yields a net non-zero moment around an axis being parallel with a yawing axis and intersecting a rotation axis of the rotor.

10. A method (310) for controlling a rotor on a wind turbine according to claim 7 and any one of claims 8-9, wherein pitching in an azimuthal dependent manner one or more blades comprises pitching one or more blades on a rotor so that a drag on the one or more blades is larger in a first azimuthal range relative to a drag in a second azimuthal range, wherein the first azimuthal range is further away from the yaw axis than the second azimuthal range.

11. A multi-rotor wind turbine (100) comprising a control system arranged for:
- Receiving one or more control parameters, where one or more yawing parameters may be described as a function of the one or more control parameters, wherein the one or more yawing parameters comprises one or more of:
i. An angular yawing velocity (ω) of a yawing section,
ii. An angular yawing acceleration (a) of the yawing section,
and/or
iii. A yawing moment (M) applied by the yawing section on a remainder of the wind turbine, and
- Determining and outputting one or more pitch angle set point values based on the control parameters for a subset of the one or more blades of the rotor to a larger extent than the remaining blades of the rotor of the rotor (102).

12. A computer program product comprising instructions which, when the program is executed by a computer, cause the computer to carry out the steps of any one of claims 1-10.

## Patentansprüche

1. Verfahren (310) zum Steuern eines Rotors (102) an einer mehrrotorigen Windkraftanlage (100), wobei der Rotor ein oder mehrere Blätter (103) umfasst, und wobei die Windkraftanlage umfasst:
- Eine Blattwinkelverstelleinrichtung,
wobei das Verfahren Folgendes umfasst:
- Betreiben (312) des Rotors in einem Stillstand- oder Leerlaufbetriebszustand,
- Bestimmen oder Empfangen (314) eines oder mehrerer Steuerparameter, wobei ein oder mehrere Gierparameter als eine Funktion des einen oder der mehreren Steuerparameter beschrieben werden können, wobei der eine oder die mehreren Gierparameter eines oder mehrere umfassen von:
i. Einer Gierwinkelgeschwindigkeit eines Gierabschnitts,
ii. Einer Gierwinkelbeschleunigung des Gierabschnitts,
und/oder
iii. Einem Giermoment, das von dem Gierabschnitt auf den Rest der Windkraftanlage angewendet wird, und
- Blattwinkelverstellen (316) auf Grundlage des einen oder der mehreren Steuerparameter einer Teilmenge des einen oder der mehreren Blätter des Rotors zu einem größeren Ausmaß als die restlichen Blätter des Rotors (100) mit der Blattwinkelverstelleinrichtung.

2. Verfahren (310) zum Steuern eines Rotors an einer Windkraftanlage (100) nach einem der vorstehenden Ansprüche, wobei das Blattwinkelverstellen so durchgeführt wird, dass ein aerodynamisch verursachtes Giermoment, das durch aerodynamische Kräfte auf den Gierabschnitt angewendet wird, vergrößert oder verringert wird.

3. Verfahren (310) zum Steuern eines Rotors an einer Windkraftanlage (100) einem der vorstehenden Ansprüche, wobei die Windkraftanlage umfasst:
- Ein Giersystem zum Gieren eines Gierabschnitts der Windkraftanlage.

4. Verfahren (310) zum Steuern eines Rotors an einer Windkraftanlage (100) nach Anspruch 3, wobei das Verfahren weiter umfasst:
- Erfassen (411) eines Ausfalls im Giersystem.

5. Verfahren (310) zum Steuern eines Rotors an einer Windkraftanlage (100) nach einem der vorstehenden Ansprüche, wobei das Blattwinkelverstellen so ausgeführt wird, dass eine resultierende Änderung der aerodynamischen Kraft auf dem einen oder den mehreren Blättern zum Verringern des einen oder der mehreren Gierparameter beiträgt.

6. Verfahren (310) zum Steuern eines Rotors an einer Windkraftanlage nach einem der vorstehenden Ansprüche, wobei die Windkraftanlage eine einrotorige Windkraftanlage (100) ist.

7. Verfahren (310) zum Steuern eines Rotors an einer Windkraftanlage nach Anspruch 1, wobei das Blattwinkelverstellen einer Teilmenge des einen oder der mehreren Blätter umfasst:
- Blattwinkelverstellen von 1 und nur 1 Blatt an einem Rotor mit 3 oder 2 Blättern oder
- Blattwinkelverstellen von 2 und nur 2 Blättern an einem Rotor mit 3 Blättern.

8. Verfahren (310) zum Steuern eines Rotors an einer Windkraftanlage nach einem der vorstehenden Ansprüche, wobei das Blattwinkelverstellen des einen oder der mehreren Blätter umfasst:
- Blattwinkelverstellen auf azimutal abhängige Weise.

9. Verfahren (310) zum Steuern eines Rotors an einer Windkraftanlage nach Anspruch 8, wobei das Blattwinkelverstellen auf azimutal abhängige Weise von einem oder mehreren Blättern ein Blattwinkelverstellen eines oder mehrerer Blätter an einem Rotor derart umfasst, dass ein Moment von Widerstandskräften an dem einen oder den mehreren Blättern zu einem Nettomoment ungleich null um eine Achse führt, die zu einer Gierachse parallel ist und eine Rotationsachse des Rotors schneidet.

10. Verfahren (310) zum Steuern eines Rotors an einer Windkraftanlage nach Anspruch 7 und einem der Ansprüche 8-9, wobei das Blattwinkelverstellen auf azimutal abhängige Weise von einem oder mehreren Blättern ein Blattwinkelverstellen eines oder mehrerer Blätter an einem Rotor derart umfasst, dass ein Widerstand an dem einen oder den mehreren Blättern in einer ersten azimutalen Reichweite in Bezug auf einen Widerstand in einer zweiten azimutalen Reichweite größer ist, wobei die erste azimutale Reichweite weiter von der Gierachse entfernt ist als die zweite azimutale Reichweite.

11. Mehrrotorige Windkraftanlage (100), umfassend ein Steuersystem, das für Folgendes eingerichtet ist:
- Empfangen eines oder mehrerer Steuerparameter, wobei ein oder mehrere Gierparameter als eine Funktion des einen oder der mehreren Steuerparameter beschrieben werden können, wobei der eine oder die mehreren Gierparameter eines oder mehrere umfassen von:
i. Einer Gierwinkelgeschwindigkeit (ω) eines Gierabschnitts,
ii. Einer Gierwinkelbeschleunigung (a) des Gierabschnitts, und/oder
iii. Einem Giermoment (M), das von dem Gierabschnitt auf den Rest der Windkraftanlage angewendet wird, und
- Bestimmen und Ausgeben eines oder mehrerer Werte von Blattwinkeleinstellungspunkten auf Grundlage der Steuerparameter für eine Teilmenge des einen oder der mehreren Blätter des Rotors zu einem größeren Ausmaß als die restlichen Rotorblätter des Rotors (102).

12. Computerprogrammprodukt, umfassend Anweisungen, die, wenn das Programm von einem Computer ausgeführt wird, bewirken, dass der Computer die Schritte nach einem der Ansprüche 1-10 durchführt.

## Revendications

1. Procédé (310) pour la commande d'un rotor (102) sur une éolienne à rotors multiples (100), dans lequel le rotor comprend une ou plusieurs pales (103), et dans lequel l'éolienne comprend :
- Un système de calage,
le procédé comprenant :
- L'actionnement (312) du rotor dans un état de fonctionnement à l'arrêt ou au ralenti,
- La détermination ou la réception (314) d'un ou plusieurs paramètres de commande, où un ou plusieurs paramètres de lacet peuvent être décrits en fonction des un ou plusieurs paramètres de commande, dans lequel les un ou plusieurs paramètres de lacet comprennent un ou plusieurs de :
i. Une vitesse de lacet angulaire d'une section de lacet,
ii. Une accélération de lacet angulaire de la section de lacet,
et/ou
iii. Un couple de lacet appliqué par la section de lacet sur une partie restante de l'éolienne, et
- Le calage (316) sur la base des un ou plusieurs paramètres de commande d'un sous-ensemble des une ou plusieurs pales du rotor à une plus grande étendue que les pales restantes du rotor (100) avec le système de calage.

2. Procédé (310) pour la commande d'un rotor sur une éolienne (100) selon l'une quelconque des revendications précédentes, dans lequel ledit calage est réalisé de sorte à augmenter ou réduire un couple de lacet induit aérodynamiquement appliqué par des forces aérodynamiques sur la section de lacet.

3. Procédé (310) pour la commande d'un rotor sur une éolienne (100) selon l'une quelconque des revendications précédentes, dans lequel l'éolienne comprend :
- Un système de lacet pour le lacet d'une section de lacet de l'éolienne.

4. Procédé (310) pour la commande d'un rotor sur une éolienne (100) selon la revendication 3, dans lequel le procédé comprend en outre :
- La détection (411) d'une défaillance dans le système de lacet.

5. Procédé (310) pour la commande d'un rotor sur une éolienne (100) selon l'une quelconque des revendications précédentes, dans lequel le calage est réalisé de sorte qu'un changement résultant de force aérodynamique sur les une ou plusieurs pales contribue à réduire les un ou plusieurs paramètres de lacet.

6. Procédé (310) pour la commande d'un rotor sur une éolienne selon l'une quelconque des revendications précédentes, dans lequel l'éolienne est une éolienne à un seul rotor (100).

7. Procédé (310) pour la commande d'un rotor sur une éolienne selon la revendication 1, dans lequel le calage d'un sous-ensemble des une ou plusieurs pales comprend :
- Le calage de 1 et seulement 1 pale sur un rotor à 3 ou 2 pales ou
- Le calage de 2 et seulement 2 pales sur un rotor à 3 pales.

8. Procédé (310) pour la commande d'un rotor sur une éolienne selon l'une quelconque des revendications précédentes, dans lequel le calage des une ou plusieurs pales comprend :
- Le calage d'une manière dépendante de l'angle azimutal.

9. Procédé (310) pour la commande d'un rotor sur une éolienne selon la revendication 8, dans lequel le calage d'une manière dépendante de l'angle azimutal des une ou plusieurs pales comprend le calage des une ou plusieurs pales sur un rotor de sorte qu'un couple de forces de trainée sur les une ou plusieurs pales produise un couple différent de zéro net autour d'un axe étant parallèle à un axe de lacet et croisant un axe de rotation du rotor.

10. Procédé (310) pour la commande d'un rotor sur une éolienne selon la revendication 7 et l'une quelconque des revendications 8-9, dans lequel le calage d'une manière dépendante de l'angle azimutal des une ou plusieurs pales comprend le calage des une ou plusieurs pales sur un rotor de sorte qu'une trainée sur les une ou plusieurs pales soit plus grande dans une première plage azimutale par rapport à une trainée dans une seconde plage azimutale, dans lequel la première plage azimutale est plus éloignée de l'axe de lacet que la seconde plage azimutale.

11. Eolienne à rotors multiples (100) comprenant un système de commande agencé pour :
- Recevoir un ou plusieurs paramètres de commande, où un ou plusieurs paramètres de lacet peuvent être décrits en fonction des un ou plusieurs paramètres de commande, dans laquelle les un ou plusieurs paramètres de lacet comprennent un ou plus de :
i. Une vitesse de lacet angulaire (ω) d'une section de lacet,
ii. Une accélération de lacet angulaire (a) de la section de lacet, et/ou
iii. Un couple de lacet (M) appliqué par la section de lacet sur un reste de l'éolienne, et
- Déterminer et sortir une ou plusieurs valeurs de point de consigne d'angle de calage sur la base des paramètres de commande pour un sous-ensemble des une ou plusieurs pales du rotor à une plus grande étendue que les pales restantes du rotor du rotor (102).

12. Produit de programme informatique comprenant des instructions qui, lorsque le programme est exécuté par un ordinateur, amènent l'ordinateur à réaliser les étapes selon l'une quelconque des revendications 1-10.
